(19) Europäisches Patentamt
European Patent Office
Office européen des brevets

(11) **EP 4 413 350 B1**

(12) **EUROPEAN PATENT SPECIFICATION**

(45) Date of publication and mention
of the grant of the patent:
**01.07.2026 Bulletin 2026/27**

(21) Application number: **22793785.1**

(22) Date of filing: **26.09.2022**

(51) International Patent Classification (IPC):
*G01N 21/21* (2006.01)     *G01N 21/25* (2006.01)
*G01N 21/64* (2006.01)

(52) Cooperative Patent Classification (CPC):
**G01N 21/645; G01N 21/6445;** G01N 2021/6421;
G01N 2021/6471

(86) International application number:
**PCT/GB2022/052434**

(87) International publication number:
**WO 2023/057735 (13.04.2023 Gazette 2023/15)**

(54) **APPARATUS AND METHOD FOR MULTI-CHARACTERISTIC MEASUREMENT OF RADIATION PROPERTIES**

VORRICHTUNG UND VERFAHREN ZUR MESSUNG VON STRAHLUNGSEIGENSCHAFTEN MIT MEHREREN EIGENSCHAFTEN

APPAREIL ET PROCÉDÉ DE MESURE DE PROPRIÉTÉS DE MULTIPLES CARACTÉRISTIQUES DE RAYONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2021 GB 202114234**
**09.05.2022 GB 202206774**

(43) Date of publication of application:
**14.08.2024 Bulletin 2024/33**

(73) Proprietor: **DMG Biophotonics Limited**
**Livingston EH54 7DU (GB)**

(72) Inventor: **GAKAMSKI, Dmitri**
**Livingston, EH54 7DU (GB)**

(74) Representative: **Scintilla Intellectual Property Ltd**
**Suite 2.1**
**145 St. Vincent Street**
**Glasgow G2 5JF (GB)**

(56) References cited:
**EP-A1- 3 667 299     US-A1- 2014 193 839**
**US-B1- 6 970 241**

## Description

### Field of Invention

The present invention relates to an apparatus and a method for simultaneous measurement of properties of multiple radiation characteristics of a sample. The present invention has application in medical diagnostics, in particular, for the measurement of biomarkers in bodily fluid samples and viral antigens in mucosal tissue samples. Additionally, the present invention has application in measurement of ion concentrations in liquid inorganic/organic samples, for example, water from natural reservoirs. The apparatus and the method of the present invention have use for immunoassays in, for example, fluorescence polarisation, fluorescence resonance energy transfer (FRET) format or ratiometric measurements of ion concentration.

### Background Art

Photonic methods based on fluorescence polarisation (or anisotropy); fluorescence resonance energy transfer (FRET); or ratiometric excitation or radiation measurements are widely used in analytics because of their independence to variations in intensity of excitation radiation and the experimental geometry. (T.Terai and T. Nagano.

Fluorescent probes for bioimaging applications. Current Opinion in Chemical Biology (2008) 12(5):515-521; Swanson,JA. Ratiometric fluorescence microscopy. Methods in Microbiology (2002) 31:1-18.). Fluorescence anisotropy, for example, steady-state fluorescence anisotropy <r>, can be used to measure the equilibrium binding constant of the molecular interaction. The following equation defines the relationship between steady-state fluorescence anisotropy <r> and the parallel ($I_{VV}$) and perpendicular ($I_{VH}$) components of fluorescence emission: $< r >= \frac{I_{VV} - I_{VH}}{I_{VV} + 2*I_{VH}}$, which is the difference between parallel ($I_{VV}$) and perpendicular ($I_{VH}$) components of fluorescence emission ($I_{VV}$ - $I_{VH}$), normalised to the total fluorescence intensity ($I_{VV}$ +2*$I_{VH}$).

The principle of the FRET method relies on the transfer of excitation energy of a donor (D) to a nearby acceptor. The efficiency (E) of the energy transfer is defined as the ratio of the radiation intensity of the acceptor ($I_A$) to the radiation intensity of the donor ($I_D$) (E = $I_A$/ $I_D$).

Ratiometric methods of excitation are based on the excitation of a sample at two different wavelengths and a measurement of the intensity of fluorescence emission at one wavelength. For example, a $Ca^{2+}$ assay with the use of a Fura-2 fluorescence probe is based on the change of the excitation spectrum of $Ca^{2+}$-bound and free forms. Therefore, selective excitations of these forms at 340nm and 380nm wavelengths and detecting their radiation intensity at the emission maximum of 510nm allows the $Ca^{2+}$ concentration to be determined as a ratio of these components (Williams et al., Calcium gradients in single smooth muscle cells revealed by the digital imaging microscope using Fura-2., Nature (1985) 318(6046) 558-561). In contrast, ratiometric radiation methods use one excitation wavelength and two radiation wavelengths. Thus, $Zn^{2+}$ concentration can be measured with the use of a ZnIC probe using 513nm excitation and the radiation intensity ratio ($I$(558nm):$I$(543nm) ) (Urano et al. Development of an iminocoumarin-based zinc sensor suitable for ratiometric fluorescence imaging of neuronal zinc. J Am Chem Soc. (2007) 129(44):13447-54).

When radiation emitted from a sample is detected by an analog photodetector, it produces an output voltage proportional to the total number of photons emitted by the sample. Equally, when the photodetector is used in the so-called single-photon counting mode, the resulting number of photons counted by the photodetector is also proportional to the intensity of the radiation emitted by the sample.

All of the above photonic methods require acquisition of two radiation characteristics simultaneously, for example, two orthogonal polarisation components for calculating the fluorescence anisotropy. Conventionally, the emission radiation from the sample is usually divided into two portions, each of which is projected through parallel and perpendicularly oriented polarising filters onto two separate photodetectors when the instrument operates in a so-called T-format configuration (wherein two photodetectors are placed at 90 degrees relative to the beam of an excitation light source to measure the emission radiation beam at a 90-degree angle with respect to the excitation beam incident at the sample). Alternatively, the radiation intensity in two orthogonal directions is sequentially measured by one photodetector by swapping between the polarising filters or rotating one of polarising filters by 90 degrees when the instrument operates in a so-called L-format configuration (one detector measuring emission from a 90-degree angle relative to the direction of the beam of the excitation light source).

Consequently, multi-characteristic measurements require either sequential measurements of the sample for each radiation characteristic, or use of several photodetectors. The former is not applicable for measuring unstable samples, e.g. their properties would change during the period of time required to switch or rotate the polarizing filter, and the latter is more expensive due to use of an additional detector.

A known device OptoSplit II (Cairn Research) can produce different emission images corresponding to different components (e.g. based on polarisation or wavelength) that can be acquired simultaneously with one image sensor, without the need to change filters. This is achieved by using a special optical arrangement including a rotatable mirror cradle, a dichroic splitter and collimating optics in the emission path. However, this special optical arrangement makes the device complex, expensive and sensitive to vibrations and temperature, the complexity of which depends on the required image quality and its spatial resolution. Another example of device acquiring simultaneously different images on the same sensor by using polarizing filters is given in patent document EP 3 667 299 A1. Nevertheless here the captured light does not corresponds exclusively to different components of the light emitted by the sample under investigation.

## Summary of invention

There is a need to provide an apparatus for multi-characteristic measurement of radiation properties that overcomes at least some of the problems identified above.

It is desirable to provide an apparatus and a method for simultaneous measurement of properties (e.g. intensity) of multiple radiation characteristics (e.g. two different polarisations and/or two different wavelengths) of a sample that is portable, less complex, and more convenient to use in comparison to conventional lab-scale equipment. The sample may be a biological sample, for example a bodily fluid sample or a mucosal tissue sample; or a non-biological sample, for example, a liquid inorganic sample. The properties of the radiation characteristics can be used to measure fluorescence anisotropy so as to determine concentration of a molecule of interest in a sample and/or quantify molecular interactions.

The apparatus according to embodiments of the present invention is configured in an L-format geometry, which has fewer optical elements, lower detection limit and better signal-to-noise ratio compared to other experimental geometries, for example an epigeometry configuration, which allows accurate measurement of the properties of multiple radiation characteristics to be conducted.

Embodiments of the present invention provide an apparatus and a method for simultaneously measuring properties (e.g. intensity) of two or more radiation characteristics, which avoids the need to move or rotate any optical element (e.g. rotating a polarising filter to the desired angle) therefore is less complicated (e.g. no requirement for power) and easily scalable. The apparatus according to an embodiment of the present invention is thus a portable, handheld, inexpensive biomarker analyser that is less sensitive to vibration and temperature, which can be used in out-of-laboratory settings.

Users are provided with some degree of freedom in selecting a suitable image sensor to arrange to the apparatus according to embodiments of the present invention. In an example, the apparatus can be used in conjunction with a smartphone (cellular) device to obtain an optical image of radiation emitted by the sample. In an example according to the present invention, the smartphone device's integrated camera is used as a photodetector to detect radiation emitted by the sample.

The term image sensor means a device that detects and conveys information used to make an image. Technically the sensor can use various techniques for converting the radiation waves (photons) into electrical signals, as small bursts of current, charges, or concentration of photoactive molecules (particles) that can change their properties by reacting to radiation. These can be image sensors used in electronic imaging devices of both analog and digital types, which include photographic films or plates, digital cameras and camera modules of medical imaging equipment, night vision devices such as thermal imaging devices, radar, sonar, video camera tubes, flat-panel detectors and others. The image sensor can be a single element, for example, a photographic plate coated with an emulsion containing embedded particles of photoactive material, or be composed of several photographic plates, or be a device consisting of a set of individual elements (pixels) that can detect and convey an image formed by optical elements in the photosensitive region or regions of the image sensor.

According to a first aspect of the present invention, there is provided an apparatus for simultaneous measurement of properties of multiple radiation characteristics of a sample and a corresponding method as defined in the appended claims.

## Brief description of drawings

Embodiments of the present invention will now be described, by way of example only, with reference to the drawings, in which:

Figure 1 illustrates, in schematic form, an apparatus in an L-format geometry in accordance with an embodiment of the present invention, for simultaneous measurement of properties of VV and VH radiation characteristics of a sample with one image sensor.

Figure 2 illustrates, in schematic form, an apparatus in an L-format geometry in accordance with an embodiment of the present invention, for simultaneous measurement of properties of two spectral components of a sample with one image sensor.

Figure 3 illustrates, in schematic form, an apparatus in an L-format geometry in accordance with an embodiment of the present invention, for simultaneous measurement of properties of a mixture of different types of radiation characteristics of a sample with one image sensor.

Figure 4 illustrates, in schematic form, an apparatus in an L-format geometry in accordance with another embodiment of the present invention, for simultaneous measurement of properties of a mixture of different types of radiation characteristics of a sample with one image sensor.

Figure 5 illustrates, in schematic form, an apparatus in an L-format geometry in accordance with an embodiment of the present invention, for simultaneous measurement of properties of VV and HV polarisation radiation characteristics of a sample with one image sensor, utilising a birefringent beam displacer. Figure 6 illustrates, in schematic form, an apparatus in an L-format geometry in accordance with another embodiment of the present invention, for simultaneous measurement of properties of two spectral components of a sample with one image sensor, utilising a beam splitter.

Figure 7 is a flowchart of a method for simultaneous measurement of properties of multiple radiation characteristics of a sample, in accordance with an embodiment of the present invention.

Figure 8 is a graph of the change of fluorescence anisotropy values (Y axis) as a function of concentration of human C-reactive protein CRP (X axis) in a fluorescence anisotropy immunoassay performed with the apparatus of Figure 1.

Figure 9 is a graph of the change of fluorescence anisotropy values (Y axis) as a function of concentration of rabbit serum IgG (X axis) in a fluorescence anisotropy immunoassay performed with the apparatus of Figure 1.

**Description of embodiments**

Embodiments of the present invention provide an apparatus and a method for simultaneously conducting a multi-characteristic measurement of a sample, wherein the sample is homogeneous and structureless, and having a low optical density at an excitation wavelength. The low optical density of the sample has the effect that the attenuation of the excitation light when it passes through the sample can be neglected.

Embodiments of the present invention overcome at least some of the aforementioned obstacles. Embodiments of the present invention allow properties of polarisation components and/or several spectral components of radiation emitted from the sample to be measured simultaneously using one image sensor without the need to modify an optical configuration, for example, swapping or rotating optical elements such as polarising filters or spectral filters.

The apparatuses according to embodiments of the present invention are suitable for use, for example, in a spectrometer, an analytical instrument or a fluorescence plate reader operating in fluorescence polarisation, fluorescence resonant energy transfer (FRET) or dual-wavelength modes, which require simultaneous measurement of properties of two radiation characteristics including, for example, 1) intensity of different polarisation components, 2) intensity of donor and acceptor emission, respectively and 3) intensity of two or more spectral components. Embodiments of the present invention provide an apparatus and a method for simultaneously measuring properties (e.g. intensities) of two or more radiation characteristics of a sample without switching the positions of the polarising filter between parallel and perpendicular orientations using one image sensor, wherein these characteristics can be homogeneous (e.g. different polarisation components or e.g. different spectral ranges) or heterogeneous (e.g. both spectral and polarisation components together). For example, FRET or ratiometric measurements require just one two-segment spectral filter. To measure polarisation at a single emission wavelength two optical elements are required, which are a one-segment spectral filter and a two-segment polarising filter.

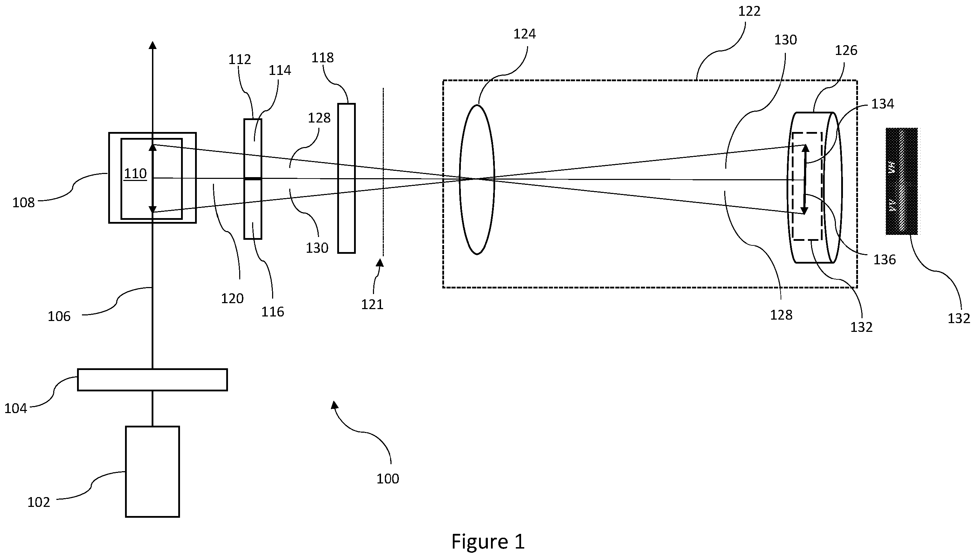

In embodiments, as shown in Figures 1 to 6, upon excitation by an excitation radiation source 102, the sample generates emission radiation forming an emission radiation beam having a distal end 121. The emission radiation beam is formed by passing through an optical element, for example, through an aperture in a cuvette containing the sample.

A radiation segmenting module is configured to simultaneously impart different respective radiation characteristics to corresponding different segments of the emission radiation beam. In embodiments, as shown in Figures 1 to 6, the radiation segmenting module is arranged on a radiation path between the excitation radiation source 102 and the distal end 121 of the emission radiation beam. The radiation path comprises an excitation radiation path leg between the excitation radiation source 102 and the sample 110, and an emission radiation path leg between the sample 110 and the distal end 121 of the emission radiation beam. The radiation segmenting module according to embodiments of the present invention comprises a plurality of filter segments, which may be arranged on either the excitation radiation path leg or the emission radiation path leg or both of the path legs. The emission radiation beam may be uncollimated when incident on the plurality of the filter segments, therefore a special optical arrangement, for example a beam splitter and collimating optics in the emission path leg, is not required for a multi-characteristic measurement using a single image sensor, which makes it less complex, inexpensive, and less sensitive to vibrations and temperature.

In embodiments, for example as shown in Figures 1 to 6, an imaging module 122, which is represented with the dashed box in Figures 1 to 6, is arranged with the apparatus so as to obtain a segmented optical image, which corresponds to the different segments of the emission radiation beam. The imaging module 122 comprises a single image sensor chip 126 configured to obtain the segmented optical image and a single objective element 124 for forming the segmented optical image onto the single image sensor chip 126. The imaging module 122 has an acceptance angle optimally configured to receive the emission radiation beam.

The apparatus according to embodiments of the present invention, for example as shown in Figures 1 to 6, is configured in an L-format geometry with the emission radiation beam angled with respect to the excitation beam incident at the sample, thereby optimising the signal-to-noise ratio of the emission radiation beam. Preferably, the emission radiation beam is at a 90-degree angle with respect to the excitation beam incident at the sample, so the imaging module 122 and the excitation radiation source 102 may be arranged at 90 degrees relative to one another when the apparatus is in use.

The imaging module 122 may comprise a processor configured to convert the segmented optical image into a corresponding digital image representation, which may be stored in a storage medium of the imaging module 122 for further processing, for example, for determining intensities of the radiation characteristics imparted to the different segments of the emission radiation beam.

The apparatus according to embodiments of the present invention can operate independently of the imaging module and therefore can be sold separately. The imaging module may comprise a digital camera, a camera integrated in a smartphone, a webcam, an infrared camera or any multimedia device having image-capturing functionality. In a preferred embodiment of the present invention, the apparatus comprises a cell phone device which comprises the imaging module.

Features described in the context of an embodiment may be provided separately or in any suitable combination to provide other embodiments.

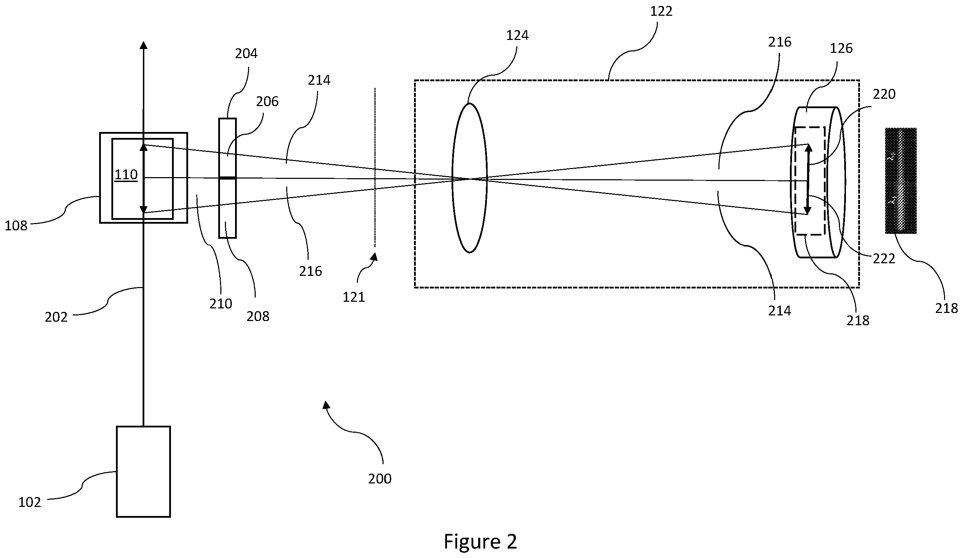

In the Figures, elements labelled with reference numerals found in the preceding Figures represent the same elements as described for the respective preceding Figure. For example, feature 122 in Figure 2 corresponds to the same feature 122 as described with reference to Figure 1.

Figure 1 illustrates an experimental arrangement for simultaneous measurement of properties of perpendicularly polarised radiation components with an image sensor 126 in the L-format geometry. Radiation trace is produced in a sample 110 placed in a cuvette 108, which is excited by vertically polarised excitation (V) provided by radiation from an unpolarised radiation from source 102 passing through a polarising filter 104. The radiation trace is projected onto an image sensor 126 through an optical mask 112 consisting of two polarising filters 114 and 116 in vertical (V) and horizontal (H) orientations to encode corresponding parts of an image 132 of the trace with respective perpendicularly polarised radiation components. A wavelength selecting filter 118 selects a spectral range of interest. In this example, the image of the trace 132 recorded by the image sensor 126 is composed of two parts representing the radiation of VV and VH components, respectively. This makes it possible to simultaneously determine intensity values of the perpendicularly polarised radiation components through integrating the signals within the corresponding parts of the recorded image and calculating the radiation anisotropy using the determined intensity values.

In other words, Figure 1 illustrates, in schematic form, an apparatus 100 simultaneous measurement of different radiation characteristic of a sample 110 using a single image sensor in accordance with an embodiment of the present invention.

With reference to Figure 1, the apparatus 100 comprises an excitation radiation source 102 configured to generate an excitation radiation beam to excite the sample 110 held in a cuvette 108. In this example, the excitation radiation beam generated by the excitation radiation source 102 is a beam of unpolarised light, which passes through a vertically polarising filter 104 arranged on the excitation radiation path leg to excite the sample 110 with a vertically polarised excitation radiation beam 106. The sample 110 subsequently generates emission radiation, wherein the emission radiation comprises an emission radiation beam 120 that has a distal end 121 that is distal to the sample 110.

In embodiments, for example as described with references to Figures 1 to 8, the distal end 121 of the emission radiation beam refers to the location 121 of a plane that intersects the emission radiation beam as it enters the imaging module 122.

Referring to Figure 1, a dual-segment polarising filter 112 is arranged on the emission radiation path leg, which comprises vertical 114 and horizontal 116 polarising filter segments to pass vertically and horizontally polarised emission components of the emission radiation beam 120, respectively. The dual-segment polarising filter 112 segments the emission radiation beam 120 passing therethrough into first 128 and second 130 beam segments. The radiation segmenting module, in this example, comprises the vertically polarising filter 104 arranged on the excitation radiation path leg and the dual-segment polarising filter 112 arranged on the emission radiation path leg, which simultaneously imparts VV and VH radiation characteristics to the first 128 and second 130 beam segments, respectively. In embodiments, for example as shown in Figure 1 and Figures 3 and 4, VV and VH radiation characteristics correspond to vertically and horizontally polarised emission components relative to relative to the orientation of the polarisation (vertical in this example) of the excitation radiation beam, respectively. In this example, the emission radiation beam is an uncollimated beam when incident on the plurality of filter segments and the dual-segment polarising filter 112 is a sheet polariser, which has an acceptance angle with respect to the emission radiation beam so as to optimise the collection of radiation from the uncollimated beam. The dual-segment polarising filter 112 transmits more polarised emission radiation than, for example, a Glan-Thompson polariser with a typical acceptance of angle of 9 to 15 degrees, typically 14 degrees used in the commercially available Edinburgh Instruments FLS900 spectrometer. The acceptance angle of the Glan-Thompson polariser depends upon its length. A long version can have an acceptance angle of up to 26 degrees, but it is an expensive element and calcite, the material used to make these polarisers, is fragile and sensitive to moisture.

Preferably, the acceptance angle of the dual-segment polarising filter 112 is at least 30, or more preferably at least 40 degrees, or more preferably at least 50 degrees with respect to the emission radiation beam, or most preferably at least 60 degrees with respect to emission radiation beam.

In embodiments, as shown in Figures 1, 5 and 6, a wavelength selecting filter 118 is positioned on the emission radiation path leg to pass the emission radiation beam at a desired wavelength range, for example, for the purpose of selecting the emission of the fluorescence probe and reducing background radiation noise present in the beam. In another example (not shown), a wavelength selecting filter is positioned on the excitation radiation path leg to pass the excitation radiation beam at a desired wavelength range.

The imaging module 122 (represented with the dashed box) is arranged at the distal end 121 of the emission radiation beam 120 so as to obtain a segmented optical image 132 of the sample 110. The segmented optical image 132 comprises two image segments 134 and 136, which correspond to the second 130 and first 128 beam segments, respectively.

Figure 2 illustrates an apparatus 200 with respect to simultaneous measurement of properties of two spectral components in $\lambda_1$ and $\lambda_2$ spectral ranges with the image sensor 126 in 90°-geometry, according to an embodiment of the present invention, which can be used to calculate parameters of a FRET-based or another type of ratiometric assay. In this example, an optical mask 204 consisting of a dual-wavelength filter 206 and 208 is used to transmit the $\lambda_1$ and $\lambda_2$ spectral ranges of the radiation trace produced by the sample 110 in the cuvette 108 upon exposure by the excitation radiation source 102. The spectrally filtered radiation of the radiation trace is projected on an image sensor 126 by lens 124.

In other words, Figure 2 illustrates, in schematic form, an apparatus 200 for simultaneous measurement of properties of multiple radiation characteristics of a sample using the imaging module 122 in accordance with an embodiment of the present invention.

With reference to Figure 2, the sample 110 is excited with unpolarised excitation radiation generated by an excitation radiation source 102. Subsequently, the sample 110 generates emission radiation which comprises an emission radiation beam 210 having a distal end 121. A dual-segment spectral filter 204 is arranged on the emission radiation path leg, which comprises two spectral filter segments 206 and 208. The dual-segment spectral filter 204 segments the emission radiation beam 210 passing therethrough into first 214 and second 216 beam segments. The radiation segmenting module, in this example, is a dual-segment spectral filter 204, which simultaneously imparts $\lambda_1$ and $\lambda_2$ radiation characteristics to the first 214 and second 216 beam segments, respectively.

The imaging module 122 (represented with the dashed box) is arranged at the distal end 121 of the emission radiation beam 210 so as to obtain a segmented optical image 218 of the sample 110, which comprises two image segments 220 and 222, corresponding to the second 216 and first 214 beam segments, respectively.

The examples illustrated in Figures 1 to 5 show that the apparatus does not need any change in optical settings and only one image sensor is required to measure properties of two or more radiation characteristics simultaneously. For example, an embodiment of the present invention is suitable for simultaneously measuring properties of four radiation characteristics using one image sensor by combining the polarising and spectral filters in one optical mask. The number of properties (e.g. intensities) of radiation characteristics that can be simultaneously measured depends on the number of segments into which the emission trace can be divided and whether the intensities are large enough to be accurately measured by the image sensor.

In other words, embodiments of the present invention are able to simultaneously measure properties of a plurality of radiation characteristics of a sample, wherein the radiation characteristics may be related to different polarisation components, different spectral components, or a mixture thereof.

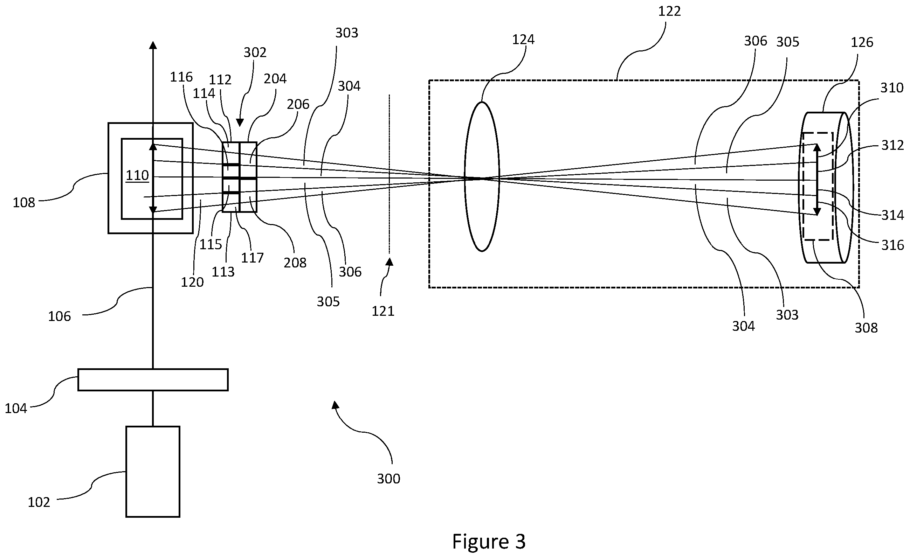

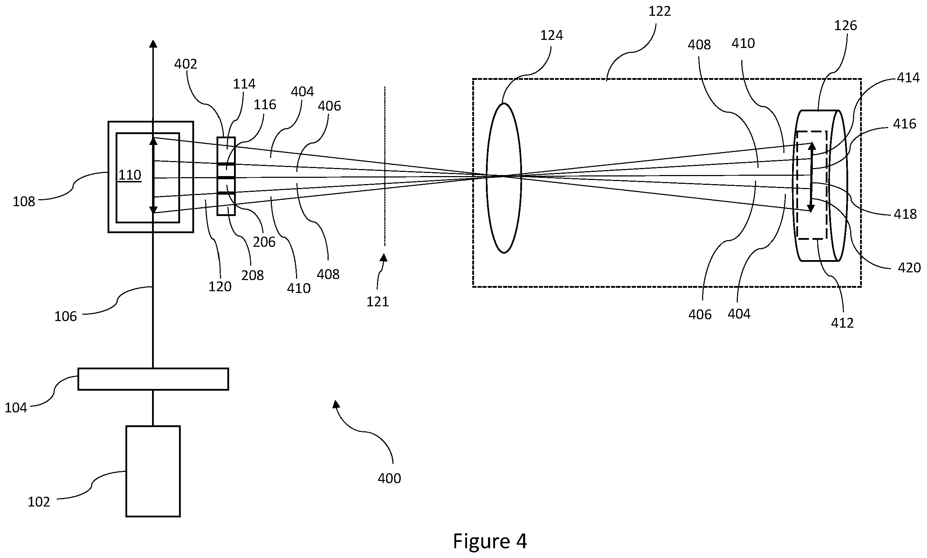

In embodiments, for example as described with reference to Figures 3 and 4, the radiation segmenting modules of apparatuses 300 and 400 allow properties of a plurality of various radiation characteristics to be simultaneously measured.

With reference to Figures 3 and 4, the sample 110 generates emission radiation upon exposure to the vertically polarised excitation radiation beam 106, wherein the emission radiation comprises an emission radiation beam 120 having a distal end 121.

Referring to Figure 3, a multi-segment filter 302 is arranged on the emission radiation path leg as a stack comprising: coplanar first and second dual-segment polarising filters 112,113 comprising vertical 114,115 and horizontal 116,117 polarising filter segments, respectively; and the dual-segment spectral filter 204 comprising spectral filter segments $\lambda_1$ and $\lambda_2$ (206 and 208). The first and second dual-segment polarising filters 112,113 and spectral 204 filters of the stack extend in a plane perpendicularly intersecting the emission radiation path leg, and are arranged in such a way that the emission radiation beam 120 passing through the first dual-segment polarising filter 112 will subsequently pass through the spectral filter segment $\lambda_1$ 206 and the emission radiation beam 120 passing through the second dual-segment polarising filter 113 will subsequently pass through the spectral filter segment $\lambda_2$ 208. The multi-segment filter 302 segments the emission radiation beam 120 passing therethrough into four beam segments 303, 304, 305 and 306.

In this example, the radiation segmenting module comprises the multi-segment filter 302 arranged on the emission radiation path leg and the vertically polarising filter 104 arranged on the excitation radiation path leg, which simultaneously imparts a combination of VV and $\lambda_1$ radiation characteristics (via the filter segments 114 and 206); a combination of VH and $\lambda_1$ radiation characteristics (via the filter segments 116 and 206); a combination of VV and $\lambda_2$ radiation characteristics (via the filter segments 114 and 208); and a combination of VH and $\lambda_2$ radiation characteristics (via the filter segments 116 and 208) to the beam segments 303. 304, 305 and 306, respectively.

A segmented optical image 308 is obtained by the imaging module 122, which comprises four image segments 310, 312, 314 and 316 corresponding to the projection of the four beam segments onto the image sensor 126.

Referring to Figure 4, a quad-segment filter 402 is arranged on the emission radiation path leg, which is configured in a one-dimensional array extending in a plane perpendicularly intersect the emission radiation path leg. The quad-segment filter 402, which comprises vertical 114 and horizontal 116 polarising filter segments and spectral filter segments $\lambda_1$ and $\lambda_2$ (206 and 208), segments the emission radiation beam 120 passing therethrough into four beam segments 404, 406, 408 and 410.

In this example, the radiation segmenting module comprises the quad-segment filter 402 arranged on the emission radiation path leg and the vertically polarising filter 104 arranged on the excitation radiation path leg, which simultaneously imparts VV, VH, $\lambda_1$ and $\lambda_2$ radiation characteristics to the beam segments 404. 406, 408, and 410, respectively. A segmented optical image 412 is obtained by the imaging module 122, which comprises four image segments 414, 416, 418 and 420 corresponding to the projection of the four beam segments onto the image sensor 126. The arrangement described with reference to Figure 3 is useful to resolve spectrally not-resolved bands.

It will be understood by the person skilled in the art that the radiation segmenting module according to embodiments of the present invention can be configured in an array with any number of filters in any orientation and each having two or more filter segments.

A segmented optical image recorded by the image sensor is then processed to determine properties of the radiation characteristics simultaneously encoded by the optical mask. Image processing involves integration the signals (charges) accumulated in the individual pixels of the sensor, corresponding to the respective parts of the emission trace and followed by subtraction of the sensor's dark counts and radiation background. Thus, imaging the radiation trace through an optical mask, which can select polarisation and/or spectral components, with subsequent image processing gives the choice to simultaneously measure properties of several radiation characteristics using only one image sensor without moving optical elements that determine the measurement conditions.

Embodiments of the present invention are suitable also for, although not limited thereto, the multi-characteristic detection of radiation by means of excitation radiation. In other words, embodiments of the present invention may comprise an excitation radiation source that is able to excite the sample at any excitation conditions, for example, generating excitation at a particular wavelength.

According to another example of the present invention (not shown), the apparatus comprises a horizontally polarising filter arranged on the excitation radiation path leg to excite the sample with a horizontally polarised excitation radiation beam. Subsequently, the sample generates emission radiation comprising an emission radiation beam. The apparatus comprises the dual-segment polarising filer arranged on the emission radiation path leg to segment the emission radiation beam passing therethrough into first and second beam segments. In this example, the radiation segmenting module comprises the dual-segment polarising filter and the horizontally polarising filter, which simultaneously imparts HV and HH radiation characteristics to corresponding segments of the emission radiation beam, respectively. At any orientation of a polarising filter arranged on the emission radiation path leg, the perpendicular component is measured if the sample is excited by a horizontally polarised excitation radiation beam. Either the parallel or perpendicular radiation component can be measured by rotating the polarising filter on the emission leg 90 by degrees only in the case that the if the sample is excited by a vertically polarised excitation radiation beam. This configuration can be employed to correct the sensitivity of the sensor segments for measuring properties (e.g. intensities) of the parallel or perpendicular radiation component.

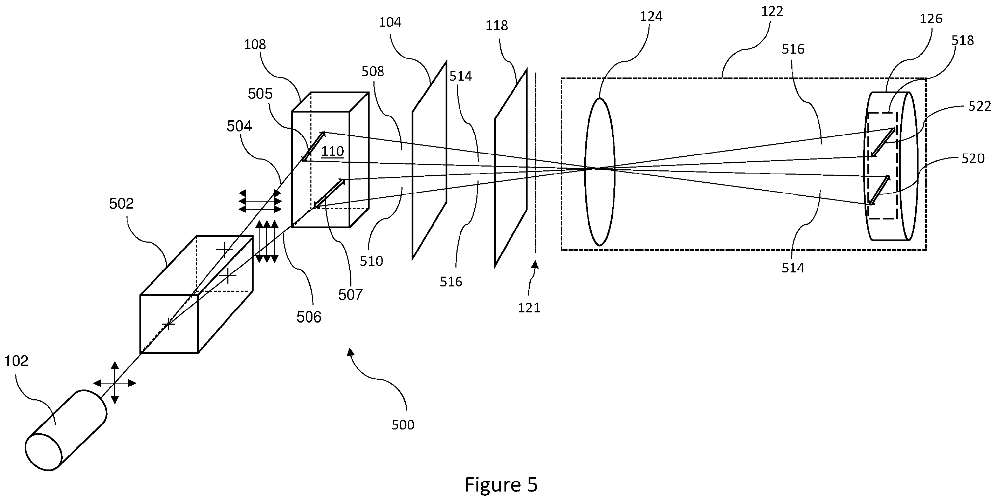

Figure 5 illustrates an example of the formation of two traces of radiation 505 and 507 induced in the sample 110 in the optical cuvette 108 by horizontally 504 and vertically 506 polarised radiation, respectively. The exciting radiation beams 504 and 506 are formed by a birefringent beam displacer 502 from the non-polarised radiation of source 102. The traces of produced radiation 507 and 505 are projected onto the sensor 126 through the vertically polarising filter 104 and wavelength selecting filter 118 by lens 124 into two images 522 and 520, reflecting VV and HV characteristics of the radiation traces respectively. Filter 118 may comprise a plurality of filter segments, split horizontally in this example, similarly to the horizontally-split dual-segment spectral filter 204, as described with reference to Figure 2.

In other words, Figure 5 illustrates, in schematic form, an apparatus 500, which may be configured in accordance with an embodiment of the present invention. A polarising beam splitter 502 arranged on the extinction radiation path leg, which splits a beam of unpolarised light generated by the excitation radiation source 102 into horizontally 504 and vertically 506 polarised excitation radiation beams. In this example, the polarising beam splitter 502 is a birefringent crystal polariser.

The horizontally 504 and vertically 506 polarised excitation radiation beams propagate simultaneously along the excitation radiation path leg to excite first 505 and second 507 volumes of the sample 110, respectively. Correspondingly, the sample 110 generates emission radiation forming into an emission radiation beam comprising first 508 and second 510 beam segments in response to the horizontally 504 and vertically 506 polarised excitation radiation beams, respectively.

The apparatus 500 also comprises the vertically polarising filter 104 arranged on the emission radiation path leg to pass the vertically polarised emission component of the first 508 and second 510 beam segments, which produces beam segments 514 and 516 that comprise vertically polarised emission component only. In this example, the radiation segmenting module comprises the polarising beam splitter 502 arranged on the excitation radiation path leg and the vertically polarising filter 104 arranged on the emission radiation path leg, which simultaneously imparts HV and VV radiation characteristics to the beam segments 514 and 516, respectively. The HV and VV radiation characteristics in this example correspond to the vertically polarised emission component (due to the vertical polarising filter 104) relative to the horizontally 504 and vertically 506 polarised excitation radiation beams, respectively.

A segmented optical image 518 (represented with the dashed box) of the sample 110 is obtained by the imaging module 122 (represented with the dashed box). The segmented optical image 518 comprises two image segments 520 and 522, which correspond to the beam segments 514 and 516, respectively.

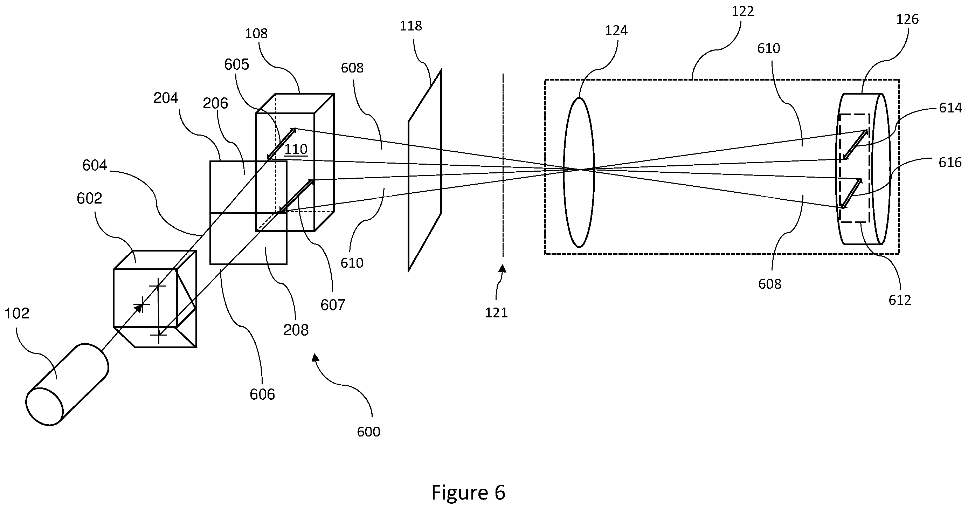

Figure 6 illustrates an example of using a two-beam excitation for simultaneous ratiometric measurements using one image sensor. The broadband radiation of source 102 is divided into two beams 604 and 606 by a beam splitter 602 and the beams are spectrally filtered by the dual-wavelength filter 204 transmitting spectral ranges $\lambda_1$ and $\lambda_2$ (206 and 208). Radiation traces 605 and 607 produced by respective excitation beams 604 and 606, are projected onto the image sensor 126 through the wavelength selecting filter 118 using lens 124. The apparatus allows intensities of two spectral components to be simultaneously measured using one image sensor by integrating the signals recorded within the recorded images of the radiation traces.

In other words, Figure 6 illustrates, in schematic form, an apparatus 600 for simultaneous measurement of multiple radiation characteristics of a sample, in accordance with an embodiment of the present invention. The radiation segmenting module, in this example, is the dual-segment spectral filter 204 arranged on the excitation radiation path leg comprising two spectral filter segments 206 and 208.

A beam splitter 602 also arranged on the excitation radiation path leg splits an unpolarised excitation radiation beam generated by the excitation radiation source 102 into two unpolarised excitation radiation beams 604 and 606. The spectral filter segments 206 and 208 pass $\lambda_1$ and $\lambda_2$ spectral components of the unpolarised excitation radiation beams 604 and 606, which excite first 605 and second 607 volumes of the sample 110, respectively. Subsequently, the sample 110 generates emission radiation forming an emission radiation beam comprising first 608 and second 610 beam segments. The dual-segment spectral filter 204 simultaneously imparts $\lambda_1$ and $\lambda_2$ radiation characteristics to the first 608 and second 610 beam segments, respectively.

In another example, without use of the beam splitter 602, the dual-segment spectral filter 204 segments an excitation radiation beam with a sufficient width passing therethrough into first and second excitation radiation beam segments to excite first and second volumes of the sample 110, respectively.

A segmented optical image 612 (represented with the dashed box) of the sample 110 is obtained by the imaging module 122 (represented with the dashed box). The segmented optical image 612 comprises two image segments 614 and 616, which correspond to the second 610 and first 608 beam segments, respectively.

In embodiments, as shown in Figures 1 to 6, the image sensor 126 is dimensioned such that image segments of the segmented optical image can be formed simultaneously on the image sensor 126. In embodiments, as shown in Figures 1 to 4, adjacent image segments of the segmented optical image are abut against each other. In other embodiments, as shown in Figures 5 and 6, adjacent image segments of the segmented optical image are in close proximity to each other.

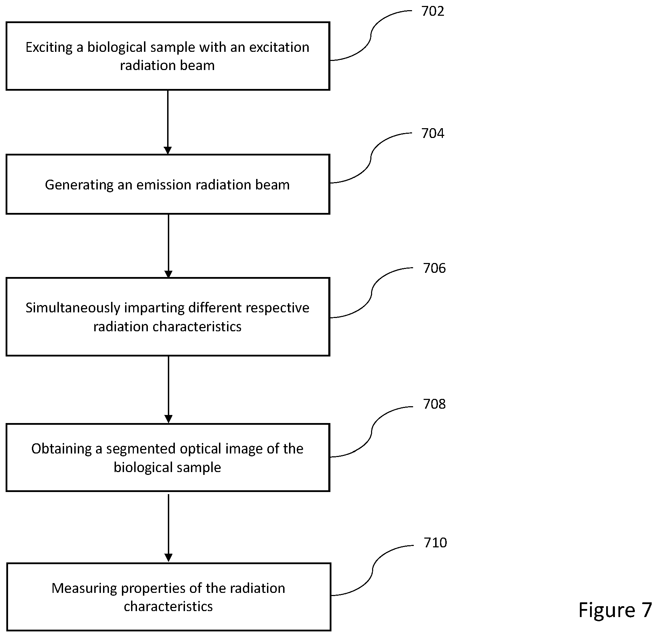

Figure 7 illustrates a flowchart of a method of simultaneous measuring properties of multiple radiation characteristics of a sample that is homogenous, structureless and having a low optical density at an excitation wavelength a sample, in accordance with an embodiment of the present invention. The method may be implemented using the apparatuses described with reference to Figures 1 to 6. The method 700 has the following steps.

At step 702, an excitation radiation source generates an excitation radiation beam to excite the sample.

At step 704, upon exposure to the excitation radiation beam, the sample generates emission radiation forming an emission radiation beam, wherein the emission radiation beam is angled with respect to the excitation beam incident at the sample, in an L-format geometry.

At step 706, different respective radiation characteristics are simultaneously imparted to corresponding different segments of the emission radiation beam. This step may involve selecting orthogonal polarisation components or different spectral components of the different segments of the emission radiation beam. This step may also involve selecting a mixture of orthogonal polarisation components and different spectral components of the different segments of the emission radiation beam.

At step 708, a segmented optical image is obtained, wherein different segments of the segmented optical image correspond to the different segments of the emission radiation beam. The segmented optical image may be obtained by the imaging module 122 comprising a single image sensor chip as described with reference to Figures 1 to 6. In one example, the segmented optical image is obtained by a cell phone device comprising the imaging module 122.

At step 710, properties of the radiation characteristics imparted to the different segments of the emission radiation beam are measured. This step may involve measuring intensities of the radiation characteristics for the purpose of, for example, calculating a fluorescence anisotropy of the sample.

A biomarker analyser operating in accordance with the apparatus 100 described in Figure 1 was used to measure the concentration of human C-reactive protein (CRP) and rabbit serum IgG antibody.

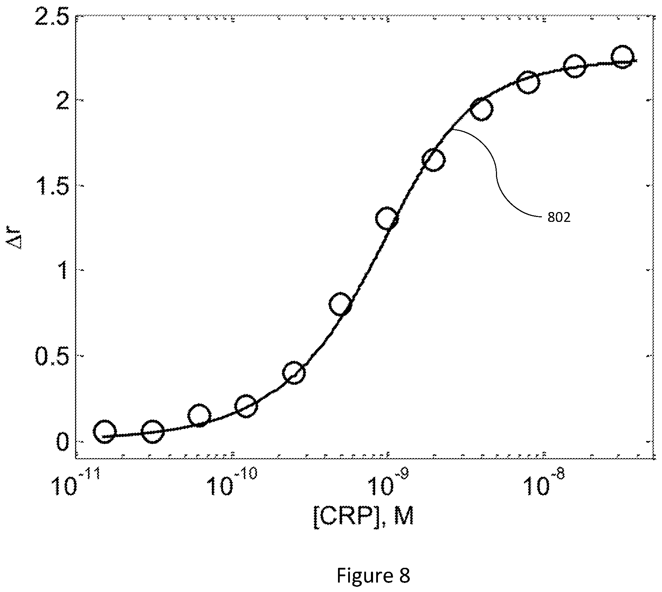

Figure 8 shows an example of the application of the experimental layout shown in Figure 1 to measure a human CRP assay standard curve. Fab fragments of a mouse monoclonal antibody specific to human CRP (clone 6404, Medix Biochemica, Finland) labelled by fluorescence probe KU530 (KU dyes ApS, Denmark) were used as a specific ligand. The measurements were conducted in Phosphate Buffered Saline (PBS) containing 2mM CaCl2, pH 7.5. at 20 degrees Celsius. CPR concentration was varied from 30pM to $0.3\mu M$. Radiation of a fluorescence-labelled Fab fragment (5 nM) was excited with vertically polarised light from a 520 nm LED (5 mW), and the fluorescence trace was recorded on an image sensor (ISOCELL 2L3) of a smartphone (Samsung Galaxy S9) through a two-channel segmented polarising filter, one part of which transmits the vertical and the other horizontal component and a 600nm-bandpass filter with 95% transmittance and 60nm bandwidth (Semrock). The images were recorded at 2s exposure using F1.9 aperture, and ISO200 sensor sensitivity. Fluorescence anisotropy changes ($\Delta r$) calculated from the *Ivv* and *Ivh* components are plotted as a function of CRP concentration.

In other words, Figure 8 demonstrates an application of the apparatus 100 as shown in Figure 1 in a fluorescence anisotropy immunoassay for calculating a human CRP assay standard curve 802. The sample 110 is produced by binding of a fluorescence-labelled ligand to a target biological substance. In this example, the target biological substance is human CRP and the fluorescence-labelled ligand (quantity 5 nM) is an antigen-binding fragment of a mouse monoclonal antibody labelled with a fluorescence probe KU530 (KU dyes™ ApS, Denmark), which is specific to human CRP (Medix Biochemica™, Finland, clone 6404). The biological sample is then placed in the cuvette 108, which contains a phosphate-buffered saline (PBS) solution (2mM CaCl2, pH 7.5 at 20 degrees Celsius). The vertically polarised excitation beam 106 (resulting from the excitation radiation source 102, e.g. a 520 nm wavelength LED with power 5 mW) was used to excite the fluorescence-labelled ligand in the sample 110. Subsequently, the emission radiation beam 120 is generated, which then passes through the dual-segment polarising filter 112 and results in the beam segments 128 and 130. In this example, the beam segments 128 and 130 are simultaneously imparted with the VV and VH radiation characteristics, respectively. The beam segments 128 and 130 are further transmitted through the wavelength selecting filter 118, with a centre wavelength of 600nm, 95% transmittance and a 60nm bandwidth (Semrock™).

In this example, the imaging module 122 is a Samsung Galaxy S9 smartphone comprising the image sensor 126 (ISOCELL 2L3) and the objective 124, wherein the image sensor 126 is used to obtain the segmented optical image 126 of the biological sample. The image segments 134 and 136 correspond to the different beam segments of the emission radiation beam. A change in the degree of fluorescence polarisation which has taken place in the fluorescence-labelled ligand as result of its binding to the target biological substance was obtained for a range of CRP concentrations between 30 picomole to 0.3 micromole. The images were recorded with a 2s exposure time using an F1.9 aperture, and ISO200 sensor sensitivity. Fluorescence anisotropy changes ($\Delta r$) calculated from the intensities of the VV and VH radiation characteristics ($I_{VV}$ and $I_{VH}$, respectively) are plotted as a function of CRP concentration.

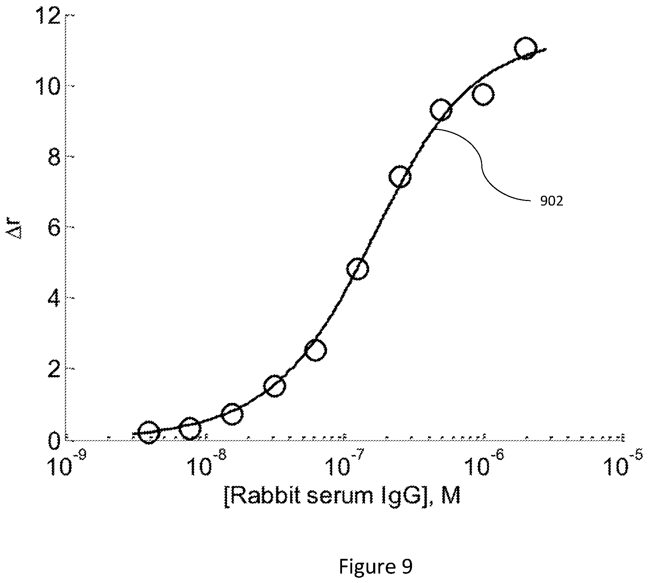

Figure 9 shows an example of the application of the experimental layout shown in Figure 1 to measure a standard curve of a total rabbit IgG assay. Recombinant protein A (Novus Biologicals, NBP2-35001), selectively labelled at C-terminal cysteine with fluorescence probe KU530 (KU dyes ApS, Denmark), was used as a specific ligand. The measurements were conducted in PBS, pH 7.5. at 20 degrees Celsius. The concentration of IgG was varied from 4nM to $3\mu M$. Radiation of a fluorescence-labelled Fab fragment (5 nM) was excited with vertically polarised light from a 520 nm LED (5 mW), and the fluorescence trace was recorded on an image sensor (ISOCELL 2L3) of a smartphone (Samsung Galaxy S9) through a two-channel segmented polarising filter, one part of which transmits the vertical and the other horizontal component and a 600nm-bandpass filter with 95% transmittance and 60nm bandwidth (Semrock). Images were recorded at 0.5 s exposure using F1.9 aperture and ISO50 sensor sensitivity. Fluorescence anisotropy changes ($\Delta r$) calculated from the *Ivv* and *Ivh* components are plotted as a function of IgG concentration.

In other words, Figure 9 demonstrates another application of the apparatus 100 as shown in Figure 1 in a fluorescence anisotropy immunoassay for calculating a standard curve 902 of a total rabbit IgG antibody assay. In this example, the target biological substance is rabbit IgG antibody and the fluorescence-labelled ligand (quantity 5 nM) is recombinant protein A (Novus Biologicals™, NBP2-35001) selectively labelled at C-terminal cysteine with a fluorescence probe KU530 (KU dyes™ ApS, Denmark). The biological sample is then placed in the cuvette 108, which contains a phosphate-buffered saline (PBS) solution (pH 7.5 at 20 degrees Celsius). The vertically polarised excitation beam 106 (resulting from the excitation radiation source 102, e.g. a 520 nm wavelength LED with power 5 mW) was used to excite the fluorescence-labelled ligand in the biological sample 110. Subsequently, the emission radiation beam 120 is generated, which then passes through the dual-segment polarising filter 112 and results in the beam segments 128 and 130. In this example, the beam segments 128 and 130 are simultaneously imparted with the VV and VH radiation characteristics, respectively. The beam segments 128 and 130 are further transmitted through the wavelength selecting filter 118, with a centre wavelength of 600nm, 95% transmittance and a 60nm bandwidth (Semrock™).

In this example, the imaging module 122 is a Samsung Galaxy S9 smartphone comprising the image sensor 126 (ISOCELL 2L3) and the objective 124, which is used to obtain the segmented optical image 126 of the biological sample. The image segments 134 and 136 correspond to the different beam segments of the emission radiation beam. A change in the degree of fluorescence polarisation which has taken place in the fluorescence-labelled ligand as result of its binding to the target biological substance was obtained for a range of rabbit IgG antibody concentrations between 4 nanomole to 3 micromole. The images were recorded with a 2s exposure time using an F1.9 aperture, and ISO200 sensor sensitivity. Fluorescence anisotropy changes ($\Delta r$) calculated from the intensities of the VV and VH radiation characteristics ($I_{VV}$ and $I_{VH}$, respectively) are plotted as a function of rabbit IgG antibody concentration.

**Claims**

1. An apparatus (100) for simultaneous measurement of properties of multiple radiation characteristics of a sample (110), the apparatus comprising:

   - an excitation radiation source (102) configured to generate an excitation radiation beam to excite the sample (110), wherein the sample (110) generates emission radiation in response to the excitation radiation beam, wherein the emission radiation comprises an emission radiation beam that has a distal end that is distal to the sample; and
   - a radiation segmenting module comprising a plurality of filter segments (114 116) arranged on a radiation path between the excitation radiation source (102) and the distal end of the emission radiation beam, wherein the radiation segmenting module (112) simultaneously imparts different respective radiation characteristics to corresponding different segments of the emission radiation beam,

   wherein the apparatus is configured in an L-format geometry with the emission radiation beam angled with respect to the excitation beam incident at the sample,
   **characterised in that** the emission radiation beam is projected onto an image sensor (126) through the radiation segmenting module comprising two polarising filters (114, 116) in orthogonal orientations to encode corresponding segments of an image (132) of the emission radiation beam with respective perpendicularly polarised radiation components.

2. The apparatus of claim 1, further comprising an imaging module (122) arranged at the distal end of the emission radiation beam so as to obtain a segmented optical image wherein different segments of the segmented optical image correspond to the different segments of the emission radiation beam.

3. The apparatus of claim 2, further comprising a cell phone device which comprises the imaging module.

4. The apparatus of any preceding claim, wherein the filter segments comprise different spectral filter segments.

5. The apparatus of any preceding claim, wherein the emission radiation beam is an uncollimated beam when incident on the plurality of filter segments.

6. The apparatus of any preceding claim, wherein the polarising filters (114, 116) in orthogonal orientations form a sheet polariser having an acceptance angle with respect to the emission radiation beam so as to optimise the collection of radiation from the uncollimated beam.

7. The apparatus of claim 6, wherein the sheet polariser has an acceptance angle of 60 degrees with respect to the emission radiation beam.

8. The apparatus of any preceding claim, furthering comprising a wavelength selecting filter arranged on the radiation path to pass the emission radiation beam of a desired wavelength.

9. The apparatus of any of claims 2 to 8, wherein the imaging module comprises a processor configured to convert the segmented optical image into a corresponding digital image representation.

10. The apparatus of any of claims 2 to 9, wherein the imaging module operates in a linear mode over a range of intensity of the emission radiation beam.

11. A method of simultaneously measuring properties of multiple radiation characteristics of a sample, the method comprising:

- exciting the sample with an excitation radiation beam to cause emission radiation to be generated from the sample, wherein the emission radiation is formed into an emission radiation beam; and
- simultaneously imparting different respective radiation characteristics to corresponding different segments of the emission radiation beam, wherein the emission radiation beam is angled with respect to the excitation beam incident at the sample in an L-format geometry, **characterised by** projecting the emission radiation beam onto an image sensor (126) through two polarising filters (114, 116) in orthogonal orientations to encode corresponding segments of an image (132) of the emission radiation beam with respective perpendicularly polarised radiation components.

12. The method of claim 11, wherein the sample is homogeneous and structureless,
and having an optical density such that attenuation of the excitation radiation beam when it passes through the sample can be neglected.

13. The method of claim 11 or claim 12, further comprising selecting different spectral components of the different segments of the emission radiation beam.

14. The method of any of claims 11 to 13, further comprising selecting a combination of orthogonal polarisation components and different spectral components of the different segments of the emission radiation beam.

15. The method of any of claims 11 to 14, further comprising obtaining a segmented optical image, wherein different segments of the segmented optical image correspond to the different segments of the emission radiation beam.

**Patentansprüche**

1. Vorrichtung (100) zum gleichzeitigen Messen von Eigenschaften mehrerer Strahlungscharakteristiken einer Probe (110), wobei die Vorrichtung Folgendes umfasst:

- eine Anregungsstrahlungsquelle (102), die dazu konfiguriert ist, einen Anregungsstrahlungsstrahl zu erzeugen, um die Probe (110) anzuregen, wobei die Probe (110) eine Emissionsstrahlung als Reaktion auf den Anregungsstrahlungsstrahl erzeugt, wobei die Emissionsstrahlung einen Emissionsstrahlungsstrahl umfasst, der ein distales Ende aufweist, das distal zu der Probe liegt; und
- ein Strahlungssegmentierungsmodul, das eine Vielzahl von Filtersegmenten (114, 116) umfasst, die auf einem Strahlungsweg zwischen der Anregungsstrahlungsquelle (102) und dem distalen Ende des Emissionsstrahlungsstrahls angeordnet sind, wobei das Strahlungssegmentierungsmodul (112) gleichzeitig entsprechenden verschiedenen Segmenten des Emissionsstrahlungsstrahls verschiedene jeweilige Strahlungscharakteristiken verleiht,
wobei die Vorrichtung in einer L-Formatgeometrie konfiguriert ist, wobei der Emissionsstrahlungsstrahl in Bezug auf den auf die Probe auftreffenden Anregungsstrahl abgewinkelt ist,
**dadurch gekennzeichnet, dass** der Emissionsstrahlungsstrahl durch das Strahlungssegmentierungsmodul, das zwei Polarisationsfilter (114, 116) in orthogonalen Ausrichtungen umfasst, auf einen Bildsensor (126) projiziert wird, um entsprechende Segmente eines Bildes (132) des Emissionsstrahlungsstrahls mit jeweiligen senkrecht polarisierten Strahlungskomponenten zu codieren.

2. Vorrichtung nach Anspruch 1, ferner umfassend ein Abbildungsmodul (122), das an dem distalen Ende des Emissionsstrahlungsstrahls angeordnet ist, um ein segmentiertes optisches Bild zu erlangen, wobei verschiedene Segmente des segmentierten optischen Bilds den verschiedenen Segmenten des Emissionsstrahlungsstrahls entsprechen.

3. Vorrichtung nach Anspruch 2, ferner umfassend eine Mobiltelefoneinrichtung, die das Abbildungsmodul umfasst.

4. Vorrichtung nach einem vorhergehenden Anspruch, wobei die Filtersegmente verschiedene Spektralfiltersegmente umfassen.

5. Vorrichtung nach einem vorhergehenden Anspruch, wobei der Emissionsstrahlungsstrahl ein nicht kollimierter Strahl ist, wenn er auf die Vielzahl von Filtersegmenten auftrifft.

6. Vorrichtung nach einem vorhergehenden Anspruch, wobei die Polarisationsfilter (114, 116) in orthogonalen Ausrichtungen eine Polarisationsfolie ausbilden, die einen Akzeptanzwinkel in Bezug auf den Emissionsstrahlungsstrahl aufweist, um das Sammeln von Strahlung von dem nicht kollimierten Strahl zu optimieren.

7. Vorrichtung nach Anspruch 6, wobei die Polarisationsfolie einen Akzeptanzwinkel von 60 Grad in Bezug auf den Emissionsstrahlungsstrahl aufweist.

**8.** Vorrichtung nach einem vorhergehenden Anspruch, ferner umfassend einen Wellenlängenauswahlfilter, der auf dem Strahlungsweg angeordnet ist, um den Emissionsstrahlungsstrahl einer gewünschten Wellenlänge durchzulassen.

**9.** Vorrichtung nach einem der Ansprüche 2 bis 8, wobei das Abbildungsmodul einen Prozessor umfasst, der dazu konfiguriert ist, das segmentierte optische Bild in eine entsprechende digitale Bilddarstellung umzuwandeln.

**10.** Vorrichtung nach einem der Ansprüche 2 bis 9, wobei das Abbildungsmodul in einem linearen Modus über einen Intensitätsbereich des Emissionsstrahlungsstrahls arbeitet.

**11.** Verfahren zum gleichzeitigen Messen von Eigenschaften mehrerer Strahlungscharakteristiken einer Probe, wobei das Verfahren Folgendes umfasst:

- Anregen der Probe mit einem Anregungsstrahlungsstrahl, um zu bewirken, dass eine Emissionsstrahlung von der Probe erzeugt wird, wobei die Emissionsstrahlung zu einem Emissionsstrahlungsstrahl ausgebildet ist; und
- gleichzeitiges Verleihen verschiedener jeweiliger Strahlungscharakteristiken an entsprechende verschiedene Segmente des Emissionsstrahlungsstrahls,
wobei der Emissionsstrahlungsstrahl in Bezug auf den auf die Probe auftreffenden Anregungsstrahl in einer L-Formatgeometrie abgewinkelt ist,
**gekennzeichnet durch** Projizieren des Emissionsstrahlungsstrahls durch zwei Polarisationsfilter (114, 116) in orthogonalen Ausrichtungen auf einen Bildsensor (126), um entsprechende Segmente eines Bildes (132) des Emissionsstrahlungsstrahls mit jeweiligen senkrecht polarisierten Strahlungskomponenten zu codieren.

**12.** Verfahren nach Anspruch 11, wobei die Probe homogen und strukturlos ist und eine optische Dichte aufweist, sodass eine Dämpfung des Anregungsstrahlungsstrahls, wenn er durch die Probe tritt, vernachlässigt werden kann.

**13.** Verfahren nach Anspruch 11 oder Anspruch 12, ferner umfassend Auswählen verschiedener Spektralkomponenten der verschiedenen Segmente des Emissionsstrahlungsstrahls.

**14.** Verfahren nach einem der Ansprüche 11 bis 13, ferner umfassend Auswählen einer Kombination von orthogonalen Polarisationskomponenten und verschiedenen Spektralkomponenten der verschiedenen Segmente des Emissionsstrahlungsstrahls.

**15.** Verfahren nach einem der Ansprüche 11 bis 14, ferner umfassend Erlangen eines segmentierten optischen Bilds, wobei verschiedene Segmente des segmentierten optischen Bilds den verschiedenen Segmenten des Emissionsstrahlungsstrahls entsprechen.

## Revendications

**1.** Appareil (100) permettant la mesure simultanée de propriétés de multiples caractéristiques de rayonnement d'un échantillon (110), l'appareil comprenant :

- une source de rayonnement d'excitation (102) conçue pour générer un faisceau de rayonnement d'excitation destiné à exciter l'échantillon (110), ledit échantillon (110) générant un rayonnement d'émission en réponse au faisceau de rayonnement d'excitation, ledit rayonnement d'émission comprenant un faisceau de rayonnement d'émission qui possède une extrémité distale qui est distale par rapport à l'échantillon ; et
- un module de segmentation de rayonnement comprenant une pluralité de segments de filtre (114 116) disposés sur un trajet de rayonnement entre la source de rayonnement d'excitation (102) et l'extrémité distale du faisceau de rayonnement d'émission, ledit module de segmentation de rayonnement (112) conférant simultanément des caractéristiques de rayonnement respectives différentes aux différents segments correspondants du faisceau de rayonnement d'émission,
ledit appareil étant conçu en une géométrie de format en L avec le faisceau de rayonnement d'émission incliné par rapport au faisceau d'excitation incident au niveau de l'échantillon,
**caractérisé en ce que** le faisceau de rayonnement d'émission est projeté sur un capteur d'image (126) à travers le module de segmentation de rayonnement comprenant deux filtres polarisants (114, 116) dans des orientations orthogonales de manière à coder des segments correspondants d'une image (132) du faisceau de rayonnement d'émission avec des composantes de rayonnement polarisées perpendiculairement respectives.

**2.** Appareil selon la revendication 1, comprenant en outre un module d'imagerie (122) disposé au niveau de l'extrémité distale du faisceau de rayonnement d'émission de manière à obtenir une image optique segmentée dans laquelle différents segments de l'image optique segmentée correspondent aux différents segments du faisceau de rayonnement d'émission.

3. Appareil selon la revendication 2, comprenant en outre un dispositif de téléphone cellulaire qui comprend le module d'imagerie.

4. Appareil selon l'une quelconque des revendications précédentes, lesdits segments de filtre comprenant différents segments de filtre spectral.

5. Appareil selon l'une quelconque des revendications précédentes, ledit faisceau de rayonnement d'émission étant un faisceau non collimaté lorsqu'il est incident sur la pluralité de segments de filtre.

6. Appareil selon l'une quelconque des revendications précédentes, lesdits filtres polarisants (114, 116) dans des orientations orthogonales formant un polariseur en feuille présentant un angle d'acceptation par rapport au faisceau de rayonnement d'émission de manière à optimiser la collecte de rayonnement à partir du faisceau non collimaté.

7. Appareil selon la revendication 6, ledit polariseur en feuille présentant un angle d'acceptation de 60 degrés par rapport au faisceau de rayonnement d'émission.

8. Appareil selon l'une quelconque des revendications précédentes, comprenant en outre un filtre de sélection de longueur d'onde disposé sur le trajet de rayonnement de manière à laisser passer le faisceau de rayonnement d'émission d'une longueur d'onde souhaitée.

9. Appareil selon l'une quelconque des revendications 2 à 8, ledit module d'imagerie comprenant un processeur configuré pour convertir l'image optique segmentée en une représentation d'image numérique correspondante.

10. Appareil selon l'une quelconque des revendications 2 à 9, ledit module d'imagerie fonctionnant en mode linéaire sur une plage d'intensité du faisceau de rayonnement d'émission.

11. Procédé de mesure simultanée de propriétés de multiples caractéristiques de rayonnement d'un échantillon, le procédé comprenant :

   - l'excitation de l'échantillon avec un faisceau de rayonnement d'excitation de manière à provoquer la génération d'un rayonnement d'émission à partir de l'échantillon, ledit rayonnement d'émission étant formé en un faisceau de rayonnement d'émission ; et
   - la transmission simultanée de différentes caractéristiques de rayonnement respectives aux différents segments correspondants du faisceau de rayonnement d'émission,

ledit faisceau de rayonnement d'émission étant incliné par rapport au faisceau d'excitation incident au niveau de l'échantillon dans une géométrie de format en L,

**caractérisé par** la projection du faisceau de rayonnement d'émission sur un capteur d'image (126) à travers deux filtres polarisants (114, 116) dans des orientations orthogonales de manière à coder des segments correspondants d'une image (132) du faisceau de rayonnement d'émission avec des composantes de rayonnement polarisées perpendiculairement respectives.

12. Procédé selon la revendication 11, ledit échantillon étant homogène et sans structure, et présentant une densité optique telle que l'atténuation du faisceau de rayonnement d'excitation lorsqu'il traverse l'échantillon puisse être négligée.

13. Procédé selon la revendication 11 ou la revendication 12, comprenant en outre la sélection de différentes composantes spectrales des différents segments du faisceau de rayonnement d'émission.

14. Procédé selon l'une quelconque des revendications 11 à 13, comprenant en outre la sélection d'une combinaison de composantes de polarisation orthogonales et de différentes composantes spectrales des différents segments du faisceau de rayonnement d'émission.

15. Procédé selon l'une quelconque des revendications 11 à 14, comprenant en outre l'obtention d'une image optique segmentée, différents segments de l'image optique segmentée correspondant aux différents segments du faisceau de rayonnement d'émission.

Figure 1

EP 4 413 350 B1

Figure 2

Figure 3

Figure 4

Figure 5

EP 4 413 350 B1

Figure 6

```
┌─────────────────────────────────────┐
│  Exciting a biological sample with   │ ── 702
│       an excitation radiation beam   │
└─────────────────────────────────────┘
                  │
                  ▼
┌─────────────────────────────────────┐
│   Generating an emission radiation   │ ── 704
│                beam                  │
└─────────────────────────────────────┘
                  │
                  ▼
┌─────────────────────────────────────┐
│  Simultaneously imparting different  │ ── 706
│   respective radiation characteristics│
└─────────────────────────────────────┘
                  │
                  ▼
┌─────────────────────────────────────┐
│  Obtaining a segmented optical image │ ── 708
│       of the biological sample       │
└─────────────────────────────────────┘
                  │
                  ▼
┌─────────────────────────────────────┐
│  Measuring properties of the         │ ── 710
│       radiation characteristics      │
└─────────────────────────────────────┘
```

Figure 7

Figure 8

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3667299 A1

**Non-patent literature cited in the description**

- *Current Opinion in Chemical Biology*, 2008, vol. 12 (5), 515-521
- **SWANSON,JA**. Ratiometric fluorescence microscopy. *Methods in Microbiology*, 2002, vol. 31, 1-18
- **WILLIAMS et al.** Calcium gradients in single smooth muscle cells revealed by the digital imaging microscope using Fura-2.. *Nature*, 1985, vol. 318 (6046), 558-561
- **URANO et al.** Development of an iminocoumarin-based zinc sensor suitable for ratiometric fluorescence imaging of neuronal zinc. *J Am Chem Soc.*, 2007, vol. 129 (44), 13447-54